# EUROPEAN PATENT APPLICATION

(11) **EP 4 742 617 A1**
(43) Date of publication of application: **13.05.2026**
(21) Application number: 24212104.4
(22) Date of filing: 11.11.2024
(51) Int. Cl.: H04L 45/02, H04L 12/437, H04L 45/023, H04L 45/028, H04L 45/00

(54) **METHOD OF TRANSMITTING DATAGRAMS ACCORDING TO A REDUNDANCY PROTOCOL AND NETWORK DEVICE**

(71) Applicant: Siemens Aktiengesellschaft, 80333 München (DE)
(72) Inventor: Keskin, Faruk, 67065 Ludwigshafen am Rhein (DE); Meenakshi Sundaram, Singaravelan, 76187 Karlsruhe (DE)
(74) Representative: Siemens Patent Attorneys

(57) **Abstract**

The invention relates to transmitting datagrams according to a redundancy protocol, wherein the datagrams are originally transmitted according to a first redundancy protocol which is employed for redundantly transmitting the datagrams within a first network section (MRP1, MRP2, MRP3, MRP4, RSTP1, RSTP2). Between a first endpoint and a second endpoint, the datagrams are transmitted via a second network section (HSR1) in which a second redundancy protocol is employed, wherein the two endpoints interface the first network section and the second network section. Upon detecting a topology change in the first network section by a detecting network device (111), the detecting network device sends a topology change notification (TC) to other network devices in the first network section, the topology change notification causing network devices (111-112, 121-124, 131-132, 141-145, 151-153) in the first network section to update their respective source address table. Upon receiving the topology change notification at a first endpoint device (201-206, 209-210) comprising the first endpoint, the first endpoint device clears its source address table immediately or after waiting a predetermined first duration and starts learning source addresses of other network devices. Upon receiving the topology change notification at a second endpoint device comprising the second endpoint, the second endpoint device waits a predetermined second duration before clearing its source address table and starting to learn source addresses of other network devices, the second duration being longer than the first duration.

## Description

The present invention relates to a method of transmitting datagrams according to a redundancy protocol, e.g. within a communication network of an industrial automation system, and a network device for transmitting datagrams according to a redundancy protocol.

Industrial automation systems are designed to monitor and control technical processes, particularly for factory, process or building automation, and provide for operating control devices, sensors, machines, and industrial plants autonomously and substantially independent from human intervention. Usually, industrial automation systems comprise a plurality of automation devices interconnected with each other via an industrial communication network. Due to a continuously growing impact of information technology on industrial automation systems, approaches for reliably providing monitoring and control functions within industrial automation systems gain increasing importance. Challenges experienced in industrial automation systems frequently result from message traffic with a large number of messages which are relatively short.

Generally, interruptions of communication connections might cause an unfavourable repetition of transmission of messages. Again, this usually results in additional loads on communication connections, which may further lead to malfunctions or system faults. If messages are not transmitted at all or not transmitted completely, an industrial automation system may be prevented from changing into a safe operating state or from remaining in such a safe operating state. Finally, this may lead to a costly outage of an entire production system.

In EP 3 881 506 B1, a method for operating a communication system having redundant routers is described, wherein datagrams are forwarded within the communication system from source communication devices to destination communication devices by routers on the basis of routing information stored in routing tables of the routers.

According to EP 3 881 506 B1, within a communication system having redundant routers, datagrams are forwarded from source communication devices to target communication devices by means of routers based on routing information stored in routing tables of the routers. For each end device, a virtual router is configured as a default gateway. The virtual router is associated with a group of several routers. Routers from the same group select among themselves a router operated as the active default gateway. The routers not operated as the active default gateway are operated as reserve gateways. The reserve gateways request from the active default gateway a transmission of stored address associations between data link layer addresses and network layer addresses of all detected communication devices. Only upon request, the active default gateway transmits all stored address associations in bundled form to a requesting reserve gateway. The reserve gateways update their respective configuration based on the address associations transmitted by the active default gateway directly and without waiting for results from a training process carried out by themselves. In case of a failure of the active default gateway and selecting a new active default gateway, the new active default gateway takes over all address associations transmitted before the failure and a virtual data link layer address assigned to the virtual router for its operation as new active default gateway.

EP4283925A1 relates to a secure transmission of time-critical data within a communication system, which comprises several local networks, in which data is transmitted by means of switching, and an overlay network, in which data is transmitted by means of routing. A gateway system is provided for connecting the communication system to at least one unsecured external network. Network layer communication over the overlay network is only authorized between authenticated system components. Switches authenticate connected end devices and assign them to a physical or logical local network according to a respective end device identity. Data link layer communication is implicitly authorized within the local networks based on an assignment of the respective end devices to the same local network. Communication at OSI layer 3-7 between end devices on different local networks or with end devices in the unsecured external network is authorized using zero trust proxies, each of which is assigned to a local network.

Network devices acting as endpoint devices interconnecting network sections in which different redundancy protocols are employed usually clear their source address tables after having received a topology change notification from one of the network sections. If a first network section is coupled to a second network section via two endpoint devices, clearing the source address tables simultaneously in both endpoint devices in response to a topology change notification from the first network section may lead to a traffic loss in the second network section acting as tunnel connection between the two endpoint devices from the first network section's perspective.

The present invention is based on the problem of realizing a fault-tolerant method for interconnecting network sections in which different redundancy protocols are employed and for providing appropriate means for implementing the method.

This problem is solved according to the present invention by means of a method having the features specified in claim 1 and by means of a network device having the features specified in claim 13. Advantageous embodiments of the present invention are specified in the dependent patent claims.

According to the present invention, a method of transmitting datagrams according to a redundancy protocol is provided. The datagrams are originally transmitted according to a first redundancy protocol which is employed for redundantly transmitting the datagrams within a first network section. Between a first endpoint and a second endpoint, the datagrams are transmitted via a second network section in which a second redundancy protocol is employed, wherein the two endpoints interface the first network section and the second network section. Preferably, the first redundancy protocol may be a media redundancy protocol, particularly MRP, or a spanning tree protocol, particularly STP, RSTP, or MSTP, whereas the second redundancy protocol may be a seamless ring redundancy protocol, particularly HSR, a parallel redundancy protocol, particularly PRP, or a protocol for redundantly transmitting streams, particularly FRER. Moreover, the two endpoints may be each associated with an interlink port of an HSR or PRP network device, particularly an HSR/PRP RedBox, wherein datagrams from the first network section are transparently tunneled through the second network section via the interlink ports.

The method according to the present invention comprises, upon detecting a topology change in the first network section by a detecting network device, sending, by the detecting network device, a topology change notification to other network devices in the first network section. The topology change notification causes network devices in the first network section to update their respective source address table. Upon receiving the topology change notification at a first endpoint device comprising the first endpoint, the first endpoint device clears its source address table immediately or after waiting a predetermined first duration and starts learning source addresses of other network devices. In turn, upon receiving the topology change notification at a second endpoint device comprising the second endpoint, the second endpoint device waits a predetermined second duration before clearing its source address table and starting to learn source addresses of other network devices, the second duration being longer than the first duration. Preferably, the second duration is shorter than a reconfiguration time after network topology changes achieved by means of the first redundancy protocol.

By means of the present invention, a topology change in the first network section does not impact data traffic in the second network section. Particularly, by ensuring that the two endpoint devices flush their respective source address tables at different points in time in response to a topology change occurring in the first network section, blocking an entire network path between the two endpoints can be avoided effectively. Therefore, in such a case, seamless redundancy can be maintained in the second network section.

According to an advantageous embodiment of the present invention, the topology change notification may be received via the interlink port of one HSR or PRP network device only, wherein the first endpoint device is the HSR or PRP network device receiving the topology change notification via its interlink port, whereas the second endpoint device is the HSR or PRP network device receiving the topology change notification via the second network section. Particularly, the first redundancy protocol may be a media redundancy protocol, e.g. MRP. Moreover, upon receiving the topology change notification at the first endpoint device, the first endpoint device preferably clears its source address table essentially immediately and starts learning source addresses of other network devices in the first network section.

According to another advantageous embodiment of the present invention, an HSR or PRP network device having received a topology change notification via its interlink port waits the first duration, whether a corresponding topology change notification is received via the second network section. In absence of a corresponding topology change notification received via the second network section during the first duration, said HSR or PRP network device acts as the first endpoint device. Accordingly, an HSR or PRP network device having received a topology change notification via the second network section may wait at least the first duration, whether a corresponding topology change notification is received via its interlink port. In absence of a corresponding topology change notification received via its interlink port during at least the first duration, said HSR or PRP network device advantageously acts as the second endpoint device.

Waiting the first duration or the at least first duration is preferably skipped for at least one predetermined first redundancy protocol, e.g. MRP. Alternatively, the first redundancy protocol may also be a spanning tree protocol, e.g. STP, RSTP, or MSTP. In this case, waiting the first duration or the at least first duration will not be skipped. Besides, an information on the employed first redundancy protocol may be derived from the received topology change notification. This allows for flexibly adapting the method according to the present invention depending on the respective first redundancy protocol. Particularly, the two HSR or PRP network devices can determine their respective role as the first second endpoint device or as the second endpoint device based on a source address in a corresponding topology change notification forwarded over the second network section, if the topology change notification is received via the interlink ports of both HSR or PRP network devices.

According to another aspect of the present invention, a network device for executing a method described above is provided. The network device is designed for transmitting datagrams according to a first redundancy protocol which is employed for redundantly transmitting the datagrams within a first network section, and for selectively acting as a first endpoint device comprising a first endpoint or as a second endpoint device comprising a second endpoint. Between the two endpoints, the datagrams are transmitted via a second network section in which a second redundancy protocol is employed. Accordingly, the first endpoint and the second endpoint interface the first network section and the second network section.

The network device according to the present invention is further configured to receive topology change notifications causing network devices in the first network section to update their respective source address table. Upon detecting a topology change in the first network section by a detecting network device, the detecting network device sends a topology change notification to other network devices in the first network section. Moreover, the network device is configured to, upon receiving a topology change notification when acting as a first endpoint device, clear its source address table immediately or after waiting a predetermined first duration, and start learning source addresses of other network devices. Finally, the network device is configured to, upon receiving a topology change notification when acting as a second endpoint device, wait a predetermined second duration before clearing its source address table and starting to learn source addresses of other network devices, wherein the second duration is longer than the first duration. Preferably, the network device comprises a switch functionality and/or HSR/PRP RedBox functionality.

The present invention will be explained in more detail with reference to exemplary embodiments illustrated in the attached drawing, in which
- Figure 1: shows a communication system comprising a plurality of network sections in which different redundancy protocols are employed,
- Figure 2: shows the communication system according to Figure 1 after occurrence of a topology change in a first network section.

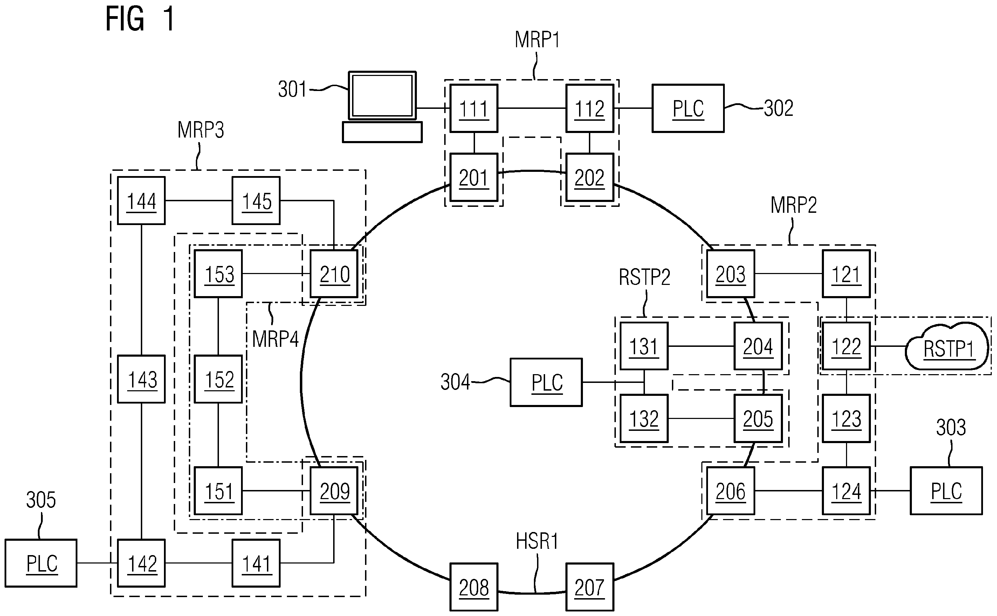

The communication system shown in Figure 1 comprises a plurality of network devices 111-112, 121-124, 131-132, 141-145, 151-153, 201-210, such as switches, routers or firewalls, and automation devices 301-305, such as programmable logic controllers, or a monitoring and control station. Each of the network devices 111-112, 121-124, 131-132, 141-145, 151-153, 201-210, is designed to forward datagrams within the industrial automation network, especially between programmable logic controllers 302-305, IO modules (input/output) or a monitoring and control station 301 and may be assigned to a network controller controlling forwarding functions of assigned network devices. Particularly, the network devices 111-112, 121-124, 131-132, 141-145, 151-153, 201-210 are each designed for transmitting datagrams according to a redundancy protocol.

Typically, the programmable logic controllers 302-305 each comprise a communication module, a central processing unit and at least one internal or peripheral IO module. By means of a communication module, a programmable logic controller can be connected to a switch, to a router or to a fieldbus system. Thus, the programmable logic controllers 302-305 constitute network devices, particularly end devices, as well. The programmable logic controllers 302-305 can also be referred to by names such as Intelligent Electronic Device or Merging Unit.

IO modules are used for exchanging actuating variables and measured values between the programmable logic controllers 302-305 and machines or devices controlled by means of a programmable logic controller. Interfaces between the programmable logic controllers 302-305 and the machines or devices can be analogue or digital. The central processing units of the programmable logic controllers 302-305 are designed and configured particularly for determining actuating variables from measured values and for issuing control commands. Preferably, above components of a programmable logic control are connected to each another via a backplane bus system. In industrial automation systems and electric power systems, automation or field devices may also be implemented by sensors or sampling units, e.g. attached to high voltage lines, with reduced complexity or simple electronic circuitry. Such devices typically exchange information via their assigned controllers.

The communication modules each comprise a transmitting and receiving unit implemented by means of a PHY circuit and a functional unit which is implemented by means of a MAC circuit and is intended to control access to a communication medium. The communication modules access their communication network adapters via interface drivers as hardware abstraction elements.

The monitoring and control station 301 is used for visualizing process control data, actuating variables and measured values which are processed or collected, respectively by programmable logic controllers, IO modules and sensors. Particularly, in the present embodiment the monitoring and control station 301 comprises at least a graphical user interface, an input device, a processor, and a communication module. Accordingly, also the monitoring and control station 301 constitutes a network device.

According to the embodiment illustrated in Figure 1, the communication system comprises a plurality of first network sections MRP1, MPR2, MRP3, MRP4, RSTP1, RSTP2 in which the datagrams are originally transmitted according to a first redundancy protocol. In case of the first network sections MRP1, MPR2, MRP3, MRP4, the first redundancy protocol is MRP (Media Redundancy Protocol), whereas the first redundancy protocol is RSTP (Rapid Spanning Tree Protocol) for the first network sections RSTP1 and RSTP2. Between a first and second endpoint device being comprises by a respective first and second endpoint device 201/202, 203/206, 204/205, 209/210, respectively, the datagrams are transmitted via a second network section HSR1 in which a second redundancy protocol is employed being different from above first redundancy protocols. The first endpoints comprised by the first endpoint devices 201, 203, 204, 209 and the second endpoints comprised by the second endpoint devices 202, 206, 205, 210 interface the respective first network section MRP1, MPR2, MRP3, MRP4, RSTP1, RSTP2 and the second network section HSR1. Additionally, the second network section HSR1 comprises two network devices 207-208 not serving as endpoint devices.

In Figure 1, the first network section MRP1 comprises the network devices 111-112 and the endpoint devices 201, 202, whereas the first network section MRP2 comprises the network devices 121-124 and the endpoint devices 203, 206. Further, the first network section MRP3 comprises the network devices 141-144 and the endpoint devices 209, 210, whereas the first network section MRP4 comprises the network devices 151-153 and shares the endpoint devices 209, 210 with the first network section MRP3. Moreover, the first network section RSTP1 is connected to the second network section HSR1 via the network device 122 and the first network section MRP2, wherein the network device 122 has both MRP and eRSTP functionality (enhanced Rapid Spanning Tree Protocol) allowing to couple an RSTP network segment to a MRP network segment. Thus, the first network section RSTP1 uses the endpoint devices 203, 206 of the first network section MRP2 for interfacing with the second network section HSR1. Finally, the first network section RSTP2 comprises the network devices 131-132 and the endpoint devices 204, 205.

The present invention is not limited to the combination of redundancy protocols shown in the embodiment illustrated by Figure 1. Generally, the first redundancy protocol may be e.g., MRP, STP (Spanning Tree Protocol), RSTP, or MSTP (Multiple Spanning Tree Protocol), while the second redundancy protocol may be e.g., HSR, PRP (Parallel Redundancy Protocol), or FRER (Frame Replication and Elimination for Reliability). According to a preferred embodiment, the first and second endpoint devices 201/202, 203/206, 204/205, 209/210 are HSR/PRP RedBoxes and each comprise at least one interlink port which is associated with a first or second endpoint. Via the respective interlink port, datagrams from the respective first network section MRP1, MPR2, MRP3, MRP4, RSTP1, RSTP2 are transparently tunneled though the second network section HSR1. For simplicity reasons, the interlink ports of the endpoint devices 201/202, 203/206, 204/205, 209/210 are not explicitly depicted in Figure 1.

Preferably, each pair of endpoints or interlink ports, respectively may be associated with a unique interconnection identifier, e.g. a tunnel ID. According to the present embodiment shown in Figure 1, the interlink ports of the endpoint devices 201, 202 are associated with tunnel ID 1 for tunneling datagrams originating from the first network section MRP1, whereas the interlink ports of the endpoint devices 203, 206 are associated with tunnel ID 2 for tunneling datagrams originating from the first network section MRP2. For coupling the two first network sections MRP3 and MRP4 to the second network section HSR1, the shared endpoint devices 209, 210 each have two interlink ports which are associated with one of the two first network sections MRP3, MRP4 exclusively. Thus, a first pair of interlink ports of the endpoint devices 209, 210 is associated with tunnel ID 3 for tunneling datagrams originating from the first network section MRP3, whereas a second pair of interlink ports of the endpoint devices 209, 210 is associated with tunnel ID 4 for tunneling datagrams originating from the first network section MRP4. Moreover, the interlink ports of the endpoint devices 204, 205 are associated with tunnel ID 5 for tunneling datagrams originating from the first network section RSTP2.

The present invention is not limited to linking a plurality of MRP network sections to an HSR network section via shared endpoint devices. Particularly, this is also possible for a plurality of RSTP network sections or an arbitrary mix of MRP and RSTP network sections which can be linked to an HSR, PRP or FRER network section via shared endpoint devices accordingly. By assigning the unique tunnel IDs, each of the first network sections MRP1, MRP2, MRP3, MRP4, RSTP1, RSTP2 can operate independently over the second network section HSR1 without interfering with each other. Advantageously, the endpoint devices will only encode or decode data traffic comprising a tunnel ID matching with a tunnel ID assigned to one of their interlink ports. Other network devices in the second network section just switch the data traffic. Generally, as can be taken from Figure 1, a pair of endpoint devices assigned to the same first network section does not have to be located adjacently in the section network section. For example, according to the present embodiment, the endpoint devices 203, 206 associated with the first network section MRP2 are not adjacent to each other in the second network section HSR1.

According to a preferred embodiment, when a datagram from one of the first network sections MRP1, MRP2, MRP3, MRP4, RSTP1, RSTP2 to be transmitted according to one of the first redundancy protocols is received at an interlink port of one of the endpoint devices 201/202, 203/206, 204/205, 209/210, the respective endpoint device comprising the interlink port at which the datagram has been received assigns a destination address from a selected address range for forwarding the datagram through the second network section HSR1. The destination address is associated with the tunnel ID assigned to the interlink port at which the datagram has been received. More specifically, the respective endpoint device may assign the destination address to comprise a portion indicative of the respective tunnel ID. Advantageously, the detecting endpoint device may assign the destination address to also comprise a portion indicative of a specific type of the respective first redundancy protocol. Based on this information, an encoded or encapsulated datagram received from the second network section HSR1 at an interlink port of one of the endpoint devices 201/202, 203/206, 204/205, 209/210 can be selected for decoding or decapsulating easily, quickly, and safely.

In general, datagrams from each one of the first network sections are forwarded through the second network section HSR1 by means of the destination address assigned by the respective endpoint device. Preferably, the interlink ports at which the datagrams have been received do not directly participate in operating the respective first redundancy protocol operation (here: MRP or RSTP). Instead, datagrams from the first network sections will be transparently tunneled into the second network section HSR1. Preferably, the tunnel ID and the assigned destination address are used for encoding and decoding control frames when being forwarded through the second network section HSR1. Especially, datagrams are encoded by the respective endpoint device before being forwarded through the second network section HSR1. Accordingly, datagrams are decoded after being forwarded through the second network section HSR1 by an endpoint device paired with the above endpoint device.

According to an alternative embodiment, instead of encoding, the respective endpoint device encapsulates control frames in tunneling frames transmitted via the second network section HSR1. Instead of decoding, an endpoint device paired with above endpoint device decapsulates the datagrams from the tunneling frames. Particularly, the interlink ports of the paired endpoint devices constitute tunnel endpoints of a data link layer tunnel established via the second network section HSR1. Preferably, encapsulating and decapsulating the datagrams is hardware-implemented by means of the endpoint devices comprising the interlink ports associated with above tunnel endpoints. Advantageously, the tunneling frames are VXLAN frames or data frames for OSI Layer 2 tunneling of data frames.

In case of network devices being migrated from one first network segment MRP1, MRP2, MRP3, MRP4, RSTP1, RSTP2 to another first network segment, it is sufficient to perform a source node movement detection and an associated flush of source address tables in the respective pair of endpoint devices 201/202, 203/206, 204/205, 209/210. Preferably, source address tables associated with the interlink ports of the endpoint devices 201/202, 203/206, 204/205, 209/210 are deleted or updated, respectively by means of topology change notifications from the respective first network segment.

Although the embodiment illustrated in Figure 1 focusses on tunneling MRP and RSTP over an HSR ring, the present invention is applicable to other redundancy protocols and combinations thereof. Particularly, the present inventions can also be used in scenarios with more than two endpoint devices or gateways, respectively assigned to a tunnel through a transit network section. Thus, focusing on two paired endpoint devices in the illustrated embodiment is done for an easier to understand explanation how to apply the present invention.

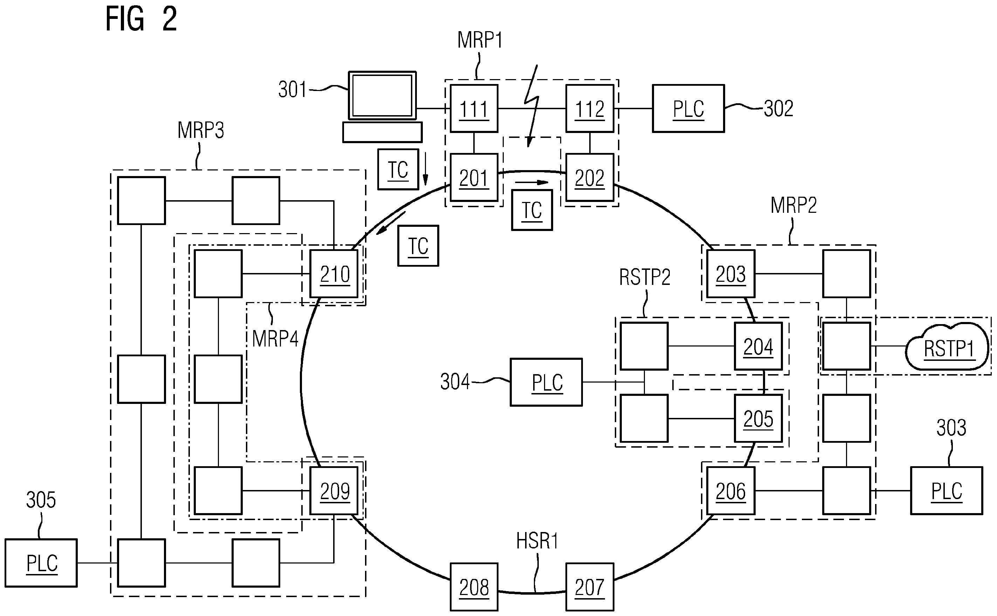

As illustrated by means of a scenario shown in Figure 2, source address tables of the endpoint devices 201/202, 203/206, 204/205, 209/210 will be deleted or updated, respectively in response to topology change notifications TC from the first network segments MRP1, MRP2, MRP3, MRP4, RSTP1, RSTP2. However, the source address tables of two paired endpoint devices 201/202, 203/206, 204/205, 209/210 will not be cleared simultaneously, in order to prevent a loss of connectivity in the HSR ring. Upon detecting a topology change, e.g. a link down between the network devices 111-112, in one of the first network sections MRP1, MRP2, MRP3, MRP4, RSTP1, RSTP2 by a detecting network device, e.g. a MRP redundancy manager 111 in MRP ring MRP1, the detecting network device 111 sends a topology change notification TC to other network devices 112, 201-202 in said first network section MRP1. The topology change notification TC will cause the network devices 111-112, 201-202 in the first network section MRP1 to update their respective source address table. Upon receiving the topology change notification TC at a first endpoint device of the paired endpoint devices 201-202, the first endpoint device clears its source address table immediately or after waiting a predetermined first duration and starts learning source addresses of other network devices. In contrast to that, upon receiving the topology change TC notification at a second endpoint device of the paired endpoint devices 201-202, the second endpoint device waits a predetermined second duration before clearing its source address table and starting to learn source addresses of other network devices, wherein the second duration is longer than the first duration. Preferably, the second duration is shorter than a reconfiguration time after network topology changes achieved by means of the respective first redundancy protocol.

Since the first redundancy protocol in the scenario shown in Figure 2 is MRP, the topology change notification TC is sent by the MRP redundancy manager 111 and, due to the link down between the network devices 111-112, received via the interlink port of one of the paired endpoint devices 201-202 only. Particularly, the topology change notification TC is received via the interlink port of the endpoint device 201 which then forwards the topology change notification TC to the endpoint device 202 via the second network section HSR1. According to the present embodiment, the first endpoint device is the endpoint device 201 receiving the topology change notification TC via its interlink port, whereas the second endpoint device is the endpoint device 202 receiving the topology change notification TC via the second network section HSR1. In this case, upon receiving the topology change notification TC at the first endpoint device 201, the first endpoint device 201 clears its source address table essentially immediately and starts learning source addresses of other network devices in the first network section MRP1.

In other scenarios, e.g. a link down in the first network section RSTP2, it may happen that both paired endpoint devices, e.g. the endpoint devices 204-205, receive a topology change notification from the first network section RSTP2 via their respective interlink port. This applies especially to scenarios with STP, RSTP, or MSTP being the first redundancy protocol. In these cases, topology change notifications may be sent by more than one network device in the respective first network section. To deal with these kinds of scenarios, an endpoint device, e.g. endpoint device 204 or 205, having received a topology change notification via its interlink port waits the first duration, whether a corresponding topology change notification is received via the second network section. In absence of a corresponding topology change notification received via the second network section during the first duration, said endpoint device 204 or 205 acts as the first endpoint device. In turn, an endpoint device 204 or 205 having received a topology change notification via the second network section may wait at least the first duration, whether a corresponding topology change notification is received via its interlink port. In absence of a corresponding topology change notification received via its interlink port during at least the first duration, said endpoint device 204 or 205 advantageously acts as the second endpoint device. Moreover, two paired endpoint devices, e.g. the endpoint devices 204-205, may determine their respective role as the first second endpoint device or as the second endpoint device based on a source address in a corresponding topology change notification forwarded over the second network section, if the topology change notification is received via the interlink ports of both endpoint devices. By doing so, a proper and reliable role assignment can be ensured. Generally, waiting the first duration or the at least first duration may be skipped at for at least one predetermined first redundancy protocol, e.g. MRP. Particularly, an information on the employed first redundancy protocol can be derived from the received topology change notification.

The endpoint devices 201-206, 209-210 are generally configured to transmit the datagrams according to a first redundancy protocol which is employed for redundantly transmitting the datagrams within a first network section MRP1, MRP2, MRP3, MRP4, RSTP1, RSTP2, and to selectively act as a first endpoint device comprising a first endpoint or as a second endpoint device comprising a second endpoint. Further the endpoint devices 201-206, 209-210 are configured to receive topology change notifications causing network devices in the first network section to update their respective source address table, wherein, upon detecting a topology change in the first network section by a detecting network device, the detecting network device sends a topology change notification to other network devices in the first network section. Moreover, the endpoint devices 201-206, 209-210 are configured to, upon receiving a topology change notification when acting as a first endpoint device, clear its source address table immediately or after waiting a predetermined first duration, and start learning source addresses of other network devices. Accordingly, the endpoint devices 201-206, 209-210 are configured to, upon receiving a topology change notification when acting as a second endpoint device, wait a predetermined second duration before clearing its source address table and starting to learn source addresses of other network devices, the second duration being longer than the first duration.

## Claims

1. Method of transmitting datagrams according to a redundancy protocol, wherein
- the datagrams are originally transmitted according to a first redundancy protocol which is employed for redundantly transmitting the datagrams within a first network section (MRP1, MRP2, MRP3, MRP4, RSTP1, RSTP2),
- the datagrams are transmitted between a first endpoint and a second endpoint via a second network section (HSR1) in which a second redundancy protocol is employed, wherein the two endpoints interface the first network section and the second network section,
- upon detecting a topology change in the first network section by a detecting network device (111), the detecting network device sends a topology change notification (TC) to other network devices in the first network section, the topology change notification causing network devices (111-112, 121-124, 131-132, 141-145, 151-153) in the first network section to update their respective source address table,
- upon receiving the topology change notification at a first endpoint device (201-206, 209-210) comprising the first endpoint, the first endpoint device clears its source address table immediately or after waiting a predetermined first duration and starts learning source addresses of other network devices,
- upon receiving the topology change notification at a second endpoint device comprising the second endpoint, the second endpoint device waits a predetermined second duration before clearing its source address table and starting to learn source addresses of other network devices, the second duration being longer than the first duration.

2. Method according to claim 1,
wherein the first redundancy protocol is a media redundancy protocol, particularly MRP, or a spanning tree protocol, particularly STP, RSTP, or MSTP, and wherein the second redundancy protocol is a seamless ring redundancy protocol, particularly HSR, a parallel redundancy protocol, particularly PRP, or a protocol for redundantly transmitting streams, particularly FRER.

3. Method according to one of the claims 1 or 2,
wherein the two endpoints are each associated with an interlink port of an HSR or PRP network device (201-206, 209-210), particularly an HSR/PRP RedBox, and wherein datagrams from the first network section are transparently tunneled through the second network section (HSR1) via the interlink ports.

4. Method according to claim 3,
wherein the topology change notification (TC) is received via the interlink port of one HSR or PRP network device (201-206, 209-210) only, wherein the first endpoint device is the HSR or PRP network device receiving the topology change notification via its interlink port, and wherein the second endpoint device is the HSR or PRP network device receiving the topology change notification via the second network section.

5. Method according to claim 4,
wherein, upon receiving the topology change notification (TC) at the first endpoint device (201-206, 209-210), the first endpoint device clears its source address table essentially immediately and starts learning source addresses of other network devices in the first network section,

6. Method according to one of the claims 4 or 5,
wherein the first redundancy protocol is a media redundancy protocol, particularly MRP.

7. Method according to claim 3,
wherein an HSR or PRP network device (201-206, 209-210) having received a topology change (TC) notification via its interlink port waits the first duration, whether a corresponding topology change notification is received via the second network section (HSR1), and wherein said HSR or PRP network device acts as the first endpoint device in absence of a corresponding topology change notification received via the second network section during the first duration.

8. Method according to one of the claims 3 or 7,
wherein an HSR or PRP network device (201-206, 209-210) having received a topology change notification (TC) via the second network section (HSR1) waits at least the first duration, whether a corresponding topology change notification is received via its interlink port, and wherein said HSR or PRP network device acts as the second endpoint device in absence of a corresponding topology change notification received via its interlink port during at least the first duration.

9. Method according to one of the claims 7 or 8,
wherein waiting the first duration or the at least first duration is skipped for at least one predetermined first redundancy protocol, and wherein an information on the employed first redundancy protocol is derived from the received topology change notification.

10. Method according to one of the claims 3, 7 or 8,
wherein the two HSR or PRP network devices determine their respective role as the first second endpoint device or as the second endpoint device based on a source address in a corresponding topology change notification forwarded over the second network section, if the topology change notification is received via the interlink ports of both HSR or PRP network devices.

11. Method according to one of the claims 7, 8 or 10,
wherein the first redundancy protocol is a spanning tree protocol, particularly STP, RSTP, or MSTP.

12. Method according to one of the claims 1 to 11,
wherein the second duration is shorter than a reconfiguration time after network topology changes achieved by means of the first redundancy protocol.

13. Network device for transmitting datagrams according to a redundancy protocol, wherein the network device is configured to
- transmit the datagrams according to a first redundancy protocol which is employed for redundantly transmitting the datagrams within a first network section (MRP1, MRP2, MRP3, MRP4, RSTP1, RSTP2),
- selectively act as a first endpoint device (201-206, 209-210) comprising a first endpoint or as a second endpoint device comprising a second endpoint, wherein the datagrams are transmitted between the two endpoints via a second network section (HSR1) in which a second redundancy protocol is employed, and wherein the first endpoint and the second endpoint interface the first network section and the second network section,
- receive topology change notifications (TC) causing network devices (111-112, 121-124, 131-132, 141-145, 151-153) in the first network section to update their respective source address table, wherein, upon detecting a topology change in the first network section by a detecting network device (111), the detecting network device sends a topology change notification to other network devices in the first network section,
- upon receiving a topology change notification when acting as a first endpoint device, clear its source address table immediately or after waiting a predetermined first duration, and start learning source addresses of other network devices,
- upon receiving a topology change notification when acting as a second endpoint device, wait a predetermined second duration before clearing its source address table and starting to learn source addresses of other network devices, the second duration being longer than the first duration.

14. Network device according to claim 13,
wherein the network device comprises a switch functionality and/or HSR/PRP RedBox functionality.

15. Network device according to one of the claims 13 or 14,
wherein the network device is configured to implement a method according to one of the claims 1 to 12.
